# EUROPEAN PATENT APPLICATION

(11) **EP 4 543 085 A1**
(43) Date of publication of application: **23.04.2025**
(21) Application number: 23838987.8
(22) Date of filing: 12.07.2023
(51) Int. Cl.: H04W 36/00

(54) **HANDOVER METHOD AND DEVICE**

(30) Priority: 14.07.2022 CN 202210833445
(71) Applicant: Huawei Technologies Co., Ltd., Shenzhen, Guangdong 518129 (CN)
(72) Inventor: XIONG, Feng, Shenzhen, Guangdong 518129 (CN); HE, Wenjie, Shenzhen, Guangdong 518129 (CN); HU, Weiwei, Shenzhen, Guangdong 518129 (CN)
(74) Representative: Gill Jennings & Every LLP
(86) International application number: PCT/CN2023/107058
(87) International publication number: WO 2024/012497

(57) **Abstract**

This application provides a handover method and apparatus, which are applied to an access point AP of a wireless local area network WLAN. The AP establishes a transmission bearer protocol-based connection with a station STA that accesses the WLAN, and the AP serves as a server. The handover method includes: determining that the STA meets a handover condition, and sending a measurement request to the STA through the connection, where the measurement request indicates the STA to perform scanning, to obtain AP information of a candidate AP to which the STA can wirelessly connect; receiving, through the connection, a measurement response sent by the STA, where the measurement response carries the AP information of the candidate AP; determining a target AP based on the AP information of the candidate AP; sending a transmission management request to the STA through the connection, where the transmission management request is used to guide the STA to access the target AP; and receiving, through the connection, a transmission management response sent by the STA. In this application, a connection is established between the STA and the AP, to transmit a message through the connection, thereby implementing handover of a STA.

## Description

This application claims priority to Chinese Patent Application No. 202210833445.2, filed with the China National Intellectual Property Administration on July 14, 2022 and entitled "HANDOVER METHOD AND APPARATUS", which is incorporated herein by reference in its entirety.

### TECHNICAL FIELD

This application relates to the field of communication technologies, and in particular, to a handover method and apparatus.

### BACKGROUND

A WLAN (Wireless Local Area Network, wireless local area network) provides a wireless connection service of a local area network, can provide high-speed wireless data access, and has been widely applied to various places such as a city, a public place, an enterprise, a building, and a home. The local area network covering an entire building or area may be established by deploying one or more AP (Access Point, access point) devices. On the WLAN, a station (station, STA) (for example, a mobile phone) accesses a network through the AP. When a received signal strength of the STA for the accessed AP is weak, the AP enables, through a measurement request in the IEEE 802.11k protocol, the STA to scan signal strength information of a surrounding AP of the STA. The AP selects a target AP that has a strong received signal strength for the STA, and guides, through a transmission management request BSS transition management in IEEE 802.11v, the STA to access the target AP that has the strong received signal strength for the STA.

However, most STAs on a smart home network are smart products (for example, Wi-Fi sockets or smart bulbs), and most of the STAs do not support the IEEE 802.11k protocol and the IEEE 802.11v protocol. As a result, the smart products cannot access, through a handover, an AP that has a strong received signal strength for the smart products.

### SUMMARY

In view of the foregoing content, it is necessary to provide a handover method and apparatus, so that a function-limited STA performs handover to and accesses an AP that has a strong received signal strength from an AP that has a weak received signal strength.

According to a first aspect, an embodiment of this application provides a handover method, which is applied to an access point AP on a wireless local area network WLAN. The AP establishes a transmission bearer protocol-based connection with a station STA that accesses the WLAN. The transmission bearer protocol uses a CS architecture, and the AP serves as a server. The handover method includes: determining that the STA meets a handover condition, and sending a measurement request to the STA through the connection, where the measurement request indicates the STA to perform scanning, to obtain AP information of a candidate AP to which the STA can wirelessly connect; receiving, through the connection, a measurement response sent by the STA, where the measurement response carries the AP information of the candidate AP; determining a target AP based on the AP information of the candidate AP; sending a transmission management request to the STA through the connection, where the transmission management request is used to guide the STA to access the target AP; and receiving, through the connection, a transmission management response sent by the STA.

According to the foregoing technical solution, a connection is established between the STA and the AP. When the AP determines that an RSSI of the STA is weak, the AP transmits an indication message, for example, a measurement request or a transmission management request, to the STA through the connection, to indicate the STA to perform scanning, determines the target AP based on the AP information of the candidate AP obtained through the scanning, and guides the STA to perform handover to and access a target AP that has a strong RSSI, so that the STA performs handover to and accesses an AP that has a strong signal strength from an AP that has a weak signal strength. In addition, information is transmitted between the AP and the STA through the connection, which has a low requirement on performance of the STA, and is easy to implement.

In a possible implementation of the first aspect, the AP information includes an AP identifier and a received signal strength RSSI of the STA for an AP corresponding to the AP identifier. The determining a target AP based on the AP information of the candidate AP includes: obtaining a first RSSI of the STA for the AP; if the first RSSI is within a first range, obtaining a second RSSI of the STA for the candidate AP and channel usage of the candidate AP; and determining the target AP based on the second RSSI and the channel usage. The RSSI of the STA for the AP may be understood as: The RSSI is a signal strength, scanned by the STA, of the AP. That is, the AP sends a broadcast packet, and the STA receives the broadcast packet and determines the signal strength of the AP based on the broadcast packet.

According to the foregoing technical solution, if the RSSI of the STA for the AP is within the first range, the target AP to which the STA is to perform handover is determined based on the channel usage of the candidate AP and the RSSI of the STA for the candidate AP.

Further, if the second RSSI corresponding to the candidate AP is greater than the first RSSI and the channel usage is greater than a first usage threshold, the candidate AP is determined as the target AP.

In a possible implementation of the first aspect, the method further includes: if the first RSSI is within a second range, obtaining the second RSSI, the channel usage of the candidate AP, and real-time traffic of the STA, where a value within the second range is greater than a value within the first range and is less than a threshold; and determining the target AP based on the second RSSI, the channel usage, and the real-time traffic.

According to the foregoing technical solution, if the RSSI of the STA for the AP is within the second range, the target AP to which the STA is to perform handover is determined based on the channel usage of the candidate AP, the RSSI of the STA for the candidate AP, and current real-time traffic of the STA.

Further, if the second RSSI of the candidate AP is greater than the first RSSI, the channel usage is greater than a second usage threshold, and the real-time traffic is greater than a traffic threshold, the candidate AP is determined as the target AP.

Further, the target AP to which the STA is to perform handover is determined based on the channel usage of the candidate AP, the RSSI of the STA for the candidate AP, the current real-time traffic of the STA, and a negotiated rate. Specifically, if the second RSSI of the candidate AP is greater than the first RSSI, the channel usage is greater than the second usage threshold, the real-time traffic is greater than the traffic threshold, and the negotiated rate is less than a first rate threshold, the candidate AP is determined as the target AP.

In a possible implementation of the first aspect, the measurement request includes a beacon request in the IEEE 802.11k protocol. The measurement response includes a beacon report in the IEEE 802.11k protocol. The transmission management request includes a BSS transition management request in the IEEE 802.11v protocol. The transmission management response includes a BSS transition management response in the IEEE 802.11v protocol.

According to the foregoing technical solution, information transmitted through a connection between both the STA and the AP is a protocol specified in a standard protocol. This slightly modifies an original AP and is easy to implement.

In a possible implementation of the first aspect, the AP and the candidate AP both use a wireless mesh network, namely, mesh networking.

According to the foregoing technical solution, because a plurality of APs on the WLAN use the mesh networking, and both SSIDs and access keys of the plurality of APs are the same, the STA needs to scan only APs with a same SSID during scanning, which is convenient for implementation. The handover delay is short.

In a possible implementation of the first aspect, the transmission bearer protocol includes any one of HTTP, MQTT, COAP, and LwM2M.

According to the foregoing technical solution, technical solutions of this application can be implemented by establishing a connection between the AP and the STA based on any one of the foregoing protocols.

In a possible implementation of the first aspect, before the AP establishes the transmission bearer protocol-based connection with the STA that accesses the wireless network, the handover method further includes: determining that the STA does not support the IEEE 802.11k protocol and/or the IEEE 802.11v protocol.

According to the foregoing technical solution, when it is determined that the STA does not support the IEEE 802.11k protocol and/or the IEEE 802.11v protocol, it is determined that the STA is a function-limited device. In this case, the connection is established between the AP and the STA.

According to a second aspect, a handover method is provided, which is applied to a station STA. After accessing a wireless local area network WLAN, the STA establishes a transmission bearer protocol-based connection with an access point AP on the WLAN. The transmission bearer protocol uses a CS architecture, and the AP serves as a server. The handover method includes: receiving, through the connection, a measurement request sent by the AP; performing scanning based on the measurement request, to obtain AP information of a candidate AP to which the STA can wirelessly connect; sending a measurement response to the AP through the connection, where the measurement response carries the AP information of the candidate AP; receiving, through the connection, a transmission management request sent by the AP, where the transmission management request is used to guide the STA to access a target AP; sending a transmission management response to the STA through the connection; and disconnecting from the connection with the AP, and accessing the target AP.

In a possible implementation of the second aspect, the measurement request includes a beacon request in the IEEE 802.11k protocol. The measurement response includes a beacon report in the IEEE 802.11k protocol. The transmission management request includes a BSS transition management request in the IEEE 802.11v protocol. The transmission management response includes a BSS transition management response in the IEEE 802.11v protocol.

In a possible implementation of the second aspect, the AP and the candidate AP both use a wireless mesh network, namely, mesh networking.

In a possible implementation of the second aspect, the transmission bearer protocol includes any one of HTTP, MQTT, COAP, and LwM2M.

According to a third aspect, an access point is provided. The access point includes: one or more processors; and a storage apparatus, configured to store one or more programs, where when the one or more programs are executed by the one or more processors, the one or more processors are enabled to implement the handover method according to the first aspect.

According to a fourth aspect, a station is provided. The station includes: one or more processors; and a storage apparatus, configured to store one or more programs, where when the one or more programs are executed by the one or more processors, the one or more processors are enabled to implement the handover method according to the second aspect.

According to a fifth aspect, a computer-readable storage medium is provided. The computer-readable storage medium stores a computer program. When the program is executed by a processor, the handover method according to the first aspect or the handover method according to the second aspect.

It should be understood that for technical effects brought by any design of the second aspect to the fifth aspect, refer to beneficial effects in the corresponding method provided above. Details are not described herein again.

### BRIEF DESCRIPTION OF DRAWINGS

FIG. 1 is a diagram of a system architecture of a system network;
FIG. 2 is a diagram of an information exchange scenario of a handover method;
FIG. 3 is a diagram of an information exchange scenario of a handover method according to an embodiment of this application;
FIG. 4A is a schematic flowchart of determining a target AP according to an embodiment of this application;
FIG. 4B is another schematic flowchart of determining a target AP according to an embodiment of this application;
FIG. 4C is still another schematic flowchart of determining a target AP according to an embodiment of this application;
FIG. 5 is a diagram of an exchange scenario in which an STA accesses an AP;
FIG. 6 is a diagram of an information exchange scenario of another handover method according to an embodiment of this application;
FIG. 7 is a diagram of a module of an AP according to an embodiment of this application;
FIG. 8 is a diagram of a module of a STA according to an embodiment of this application;
FIG. 9 is a diagram of hardware of an AP according to an embodiment of this application; and
FIG. 10 is a diagram of hardware of a STA according to an embodiment of this application.

### DESCRIPTION OF EMBODIMENTS

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features. In the descriptions of embodiments of this application, the word such as "example" or "for example" is used to represent giving an example, an illustration, or a description. Any embodiment or design described by "example" or "for example" in embodiments of this application should not be construed as being more preferred or advantageous than another embodiment or design. To be precise, the word such as "example" or "for example" is intended to present a related concept in a specific manner.

Unless otherwise defined, all technical and scientific terms used in this specification have same meanings as those usually understood by a person skilled in the art of this application. Terms used in this specification of this application are merely for the purpose of describing specific embodiments, but are not intended to limit this application. It should be understood that in this application, unless otherwise specified, "a plurality of" means two or more than two, and the term "and/or" includes any and all combinations of one or more associated listed items.

First, technical terms in embodiments of this application are described.

### 1. Received signal strength indicator (Received Signal Strength Indicator, RSSI)

The RSSI indicates a signal strength on a wireless network and is used to determine connection quality. An RSSI value attenuates as a distance increases. The RSSI is a signal strength, of an AP, scanned by a STA. That is, the AP sends a broadcast packet, and the STA receives the broadcast packet and determines the signal strength of the AP based on the broadcast packet. For a same AP, RSSIs scanned by different STAs are different. Therefore, the RSSIs in this application are all for a current STA, that is, RSSIs of the STA for APs.

### 2. CoAP protocol

The constrained application protocol (Constrained Application Protocol, COAP) CoAP is a connectionless message processing mode, and is used for transmission based on a user datagram protocol (User Datagram Protocol, "UDP" for short). The exchange mode can be a synchronous or asynchronous response. A message type may be: a confirmable (confirmable) message, a non-confirmable (non-confirmable) message, an acknowledgment (acknowledgement) message, and a reset (reset) message. A pair of a request and a response can be associated through a message identifier (message ID).

### 3. Server-client

The server-client, namely, a client-server (C/S) structure, is also referred to as a CS architecture. The C/S structure is usually a two-layer structure. The server is responsible for data management, and the client is responsible for completing an interaction task with a user. For example, the HTTP protocol uses the CS structure, an AP 1 and an AP 2 establish an HTTP connection, the AP 1 serves as the client, and the AP 2 serves as the server.

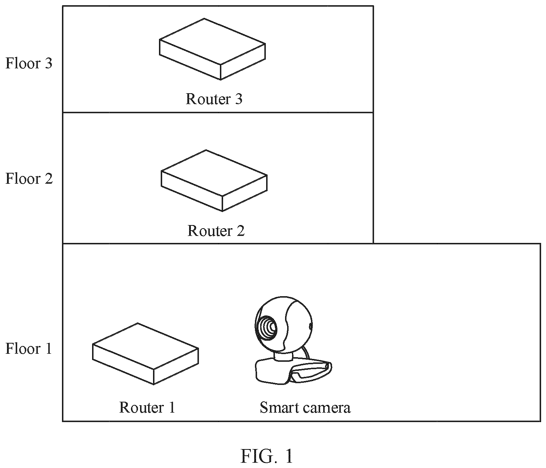

It may be understood that, to obtain better user internet access experience, when an office area or a residence area is large, a plurality of APs are disposed on a wireless local area network WLAN, so that a wireless access network including the plurality of APs covers a large area. FIG. 1 is used as an example. FIG. 1 is a diagram of an environment of a WLAN. As shown in FIG. 1, a residential place to which the WLAN is applied includes three floors. A corresponding AP is disposed on each floor, and the AP includes a router. For example, refer to FIG. 1. A router 1 is disposed at a floor 1, a router 2 is disposed at a floor 2, and a router 3 is disposed at a floor 3.

A STA is further disposed in the residential place. The STA includes a mobile phone terminal and a smart product (for example, a smart camera). For example, in FIG. 1, the STA (that is, the smart camera) is disposed at the floor 1. The smart camera accesses the router 3.

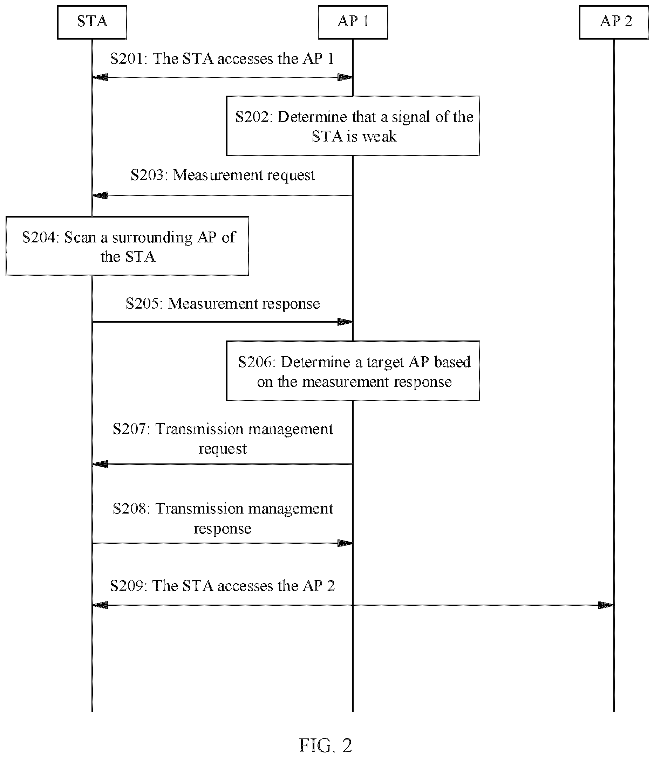

It may be understood that, because a distance between the router 3 and the smart camera is long, a received signal strength of the smart camera for the router 3 is weak. Because a distance between the router 1 and the smart camera is short, a received signal strength of the smart camera for the router 1 is strong. Therefore, the smart camera needs to perform handover to and access the router 1 that has a strong received signal strength for the smart camera from the router 3 that has a weak received signal strength for the smart camera. Correspondingly, FIG. 2 is used as an example. FIG. 2 is a diagram of an information exchange scenario of a handover method through which the STA performs handover to and accesses the AP 21 that has the strong received signal strength for the STA from the AP 1 that has the weak received signal strength for the STA. As shown in FIG. 2, the handover method may include the following steps.

S201: The STA accesses the AP 1.

Specifically, the STA may scan and discover the AP 1, and then perform link authentication with the AP 1. After the authentication succeeds, the STA establishes an association with the AP 1, and accesses the AP 1.

S202: The AP 1 determines that a signal of the STA is weak.

Specifically, after the AP 1 establishes an association with the STA, if the AP 1 determines that an RSSI of the STA for the AP 1 is less than a preset threshold, the AP 1 determines that the signal of the STA is weak.

For example, if determining that the RSSI of the STA for the AP 1 is less than 50 dBm, the AP 1 determines that the signal of the STA is weak. In this case, the STA meets a handover condition, and the AP 1 may guide the STA to perform a handover.

The preset threshold may be preset in the AP 1.

S203: The AP 1 sends a measurement request to the STA.

The measurement request includes a beacon request in the IEEE 802.11k protocol. The measurement request indicates the STA to perform scanning, to obtain AP information of a surrounding AP of the STA.

S204: After receiving the measurement request, the STA scans the surrounding AP of the STA, to obtain the AP information of the surrounding AP of the STA.

The AP information may include an AP identifier and an AP signal strength. The AP identifier is used for the AP, and the AP signal strength may include the RSSI of the STA for the AP identified by the AP identifier.

For example, two surrounding APs of the STA are disposed: the AP 1 and the AP 2, and the STA obtains the AP information of the AP 1 and the AP 2 through scanning.

The AP scanned by the STA includes an AP that the STA can wirelessly access.

S205: The STA sends a measurement response to the AP 1.

The measurement response includes a beacon report in the IEEE 802.11k protocol. The measurement response carries the AP information of the AP scanned by the STA.

S206: The AP 1 determines a target AP based on the measurement response.

The target AP is an AP to which the STA is to perform handover and connect, for example, the AP 2.

Specifically, after receiving the measurement response, the AP 1 obtains the AP information, in the measurement response, of the AP scanned by the STA. The AP information of the AP scanned by the STA may include the AP information of one or more APs, and the AP 1 determines an AP with a best RSSI as the target AP.

S207: The AP 1 sends a transmission management request to the STA.

The transmission management request indicates the STA to disconnect from a currently connected AP and access the target AP.

The transmission management request includes a BSS transition management request in the IEEE 802.11v protocol.

S208: After receiving the transmission management request, the STA sends a transmission management response to the AP 1.

The transmission management response includes a BSS transition management response in the IEEE 802.11v protocol.

S209: The STA disconnects from the AP 1, and accesses the AP 2.

It may be understood that, in the foregoing handover method, when determining that the signal of the STA that accesses the AP 1 is weak, the AP 1 indicates, through the beacon request and the beacon report in the IEEE 802.11k protocol, the STA to scan the surrounding AP, to obtain the AP information of the surrounding AP. The AP 1 determines the target AP based on the AP information of the surrounding AP of the STA, and guides, through the BSS transition management request and the BSS transition management response in the IEEE 802.11v protocol, the STA to perform handover to and access the target AP. In this way, the STA performs handover to and accesses the AP 2 that has a strong received signal strength from the AP that has a weak received signal strength for the current STA.

Clearly, in the foregoing handover method, the STA needs to support the IEEE 802.11v protocol and the IEEE 802.11k protocol. However, in an actual networking system, most of the smart products, such as an infrared remote control socket and a Wi-Fi remote control, used as the STA do not support the IEEE 802.11v protocol and/or the IEEE 802.11k protocol. Therefore, the STA cannot perform handover to and access, through the foregoing handover method, the AP 2 that has the strong RSSI from the AP that has the weak RSSI for the current STA.

Based on the foregoing problem, an embodiment of this application provides a handover method. After the STA accesses a wireless network, the STA establishes a transmission bearer protocol-based connection with an AP on the wireless network. When the AP detects that the signal of the STA is weak, the AP transmits exchange information with the STA through the established connection, indicates, through the exchange information, the STA to scan the surrounding AP of the STA, to obtain the AP information of the AP that can be wirelessly connected, and determines the target AP based on the AP information of the AP. Finally, the exchange information is sent to the STA through the established connection, to guide the STA to access the target AP, so that the STA performs handover and connects to the target AP that has an RSSI from the AP that has the RSSI for the current STA. The exchange information between the AP and the STA is transmitted through the established connection. Therefore, a requirement on a protocol supported by the STA is low. For example, the STA may not support the IEEE 802.11v protocol and/or the IEEE 802.11k protocol.

In this embodiment of this application, the transmission bearer protocol includes an internet of things protocol. For example, the transmission bearer protocol includes any one of a hypertext transfer protocol (Hyper Text Transfer Protocol, HTTP), message queuing telemetry transport (Message Queuing Telemetry Transport, MQTT), a constrained application protocol (Constrained Application Protocol, COAP), and lightweight M2M (Lightweight Machine-To-Machine, LwM2M). The internet of things protocol uses a CS architecture. Certainly, in another embodiment, the transmission bearer protocol may alternatively be another transfer protocol.

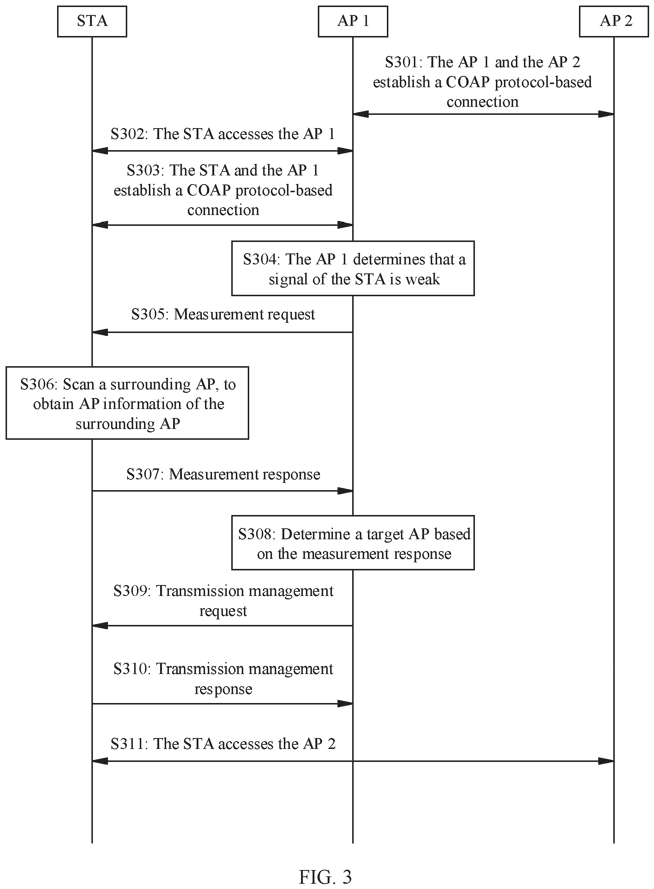

Specifically, FIG. 3 is a diagram of an information exchange scenario of a handover method according to an embodiment of this application. The handover method is applied to an AP on a WLAN. The WLAN may include a plurality of APs. For ease of description, the following describes the handover method in detail by taking an example in which the transmission bearer protocol is a COAP protocol. That is, the AP may establish a COAP protocol-based connection with the STA or another AP.

As shown in FIG. 3, the handover method may include the following steps.

S301: The AP 1 and the AP 2 establish the COAP protocol-based connection.

The AP 1 serves as a connected server, and the AP 2 serves as a connected client.

Further, if the AP 1 serves as the server on a network, the AP 1 further has a function of an access controller (AC), for example, responsible for managing another AP.

In some embodiments, the AP 1 establishes the connection with the another AP, and may transmit a parameter of the AP 1 through the established connection. For example, the AP 1 sends a parameter request to the AP 2 through the established connection, and the AP 2 sends a parameter response to the AP through the established connection. The parameter response may carry channel usage.

S302: The STA accesses the AP 1.

In step S302, the STA may scan and discover the AP 1, and then perform link authentication with the AP 1, and establish an association with the AP 1 after the authentication succeeds.

It may be understood that when the STA accesses the AP 1, a Wi-Fi connection may be established between the STA and the AP 1.

S303: The STA and the AP 1 establish the COAP protocol-based connection.

In step S302, after the STA accesses the AP 1, the AP 1 allocates an IP address to the STA. The STA establishes the COAP protocol-based connection with the AP 1 based on the IP address. The AP 1 serves as the server, and the STA serves as the client.

In some embodiments, before step S303 is performed, that is, before the STA establishes the COAP protocol-based connection with the AP 1, the method further includes:
The STA provides a performance parameter for the AP 1, and the AP 1 determines, based on the performance parameter of the STA, whether the STA supports a target protocol.

The target protocol includes the IEEE 802.11v protocol and/or the IEEE 802.11k protocol.

Specifically, the AP 1 obtains the performance parameter of the STA, and determines whether the STA supports the target protocol based on the performance parameter. If the AP 1 determines that the STA supports the target protocol, step S303 does not need to be performed. That is, the COAP protocol-based connection does not need to be established between the STA and the AP 1. If the AP 1 determines that the STA does not support the target protocol, step S303 is performed. That is, the COAP protocol-based connection is established between the STA and the AP 1.

In this way, before a transmission bearer protocol-based connection is established between the AP 1 and the STA, whether the STA supports the target protocol is first determined. If the STA supports the target protocol, the STA may perform handover to and access, based on the target protocol (for example, the IEEE 802.11v protocol and the IEEE 802.11k protocol), an AP that has a strong RSSI from the AP 1 that has an RSSI of the current STA. If the STA does not support the target protocol, the transmission bearer protocol-based connection may be established between the AP 1 and the STA, to transmit exchange information through the connection. In addition, the STA is guided, through the exchange information, to perform handover to and access the AP that has the strong RSSI from the AP 1 that has the RSSI of the current STA. The exchange information may include a message specified in the IEEE 802.11v protocol and the IEEE 802.11k protocol.

S304: The AP 1 determines that a signal of the STA is weak.

Specifically, after the AP 1 establishes an association with the STA, if the AP 1 determines that an RSSI of the STA for the AP 1 is weak, the AP 1 determines that the signal of the STA is weak. Then, the AP 1 determines that the STA may perform handover to another AP that has a strong received signal strength for the STA.

In another embodiment, step 304 specifically includes:
Obtain the RSSI of the STA for the AP 1, and if the RSSI is less than a preset threshold, determine that a signal of the STA for the AP 1 is weak.

The preset threshold may be preset in the AP 1.

S305: The AP 1 sends a measurement request to the STA through the connection.

The measurement request indicates the STA to perform scanning, to obtain AP information of a surrounding AP of the STA.

In some embodiments, the AP information may include an AP identifier and an AP signal strength. The AP identifier is used for the AP, and the AP signal strength includes the RSSI of the STA for the AP identified by the AP identifier.

Further, the AP scanned by the STA includes an AP that the STA can wirelessly access.

S306: After receiving the measurement request, the STA scans the surrounding AP, to obtain AP information of the surrounding AP.

S307: The STA sends a measurement response to the AP 1 through the connection.

The measurement response carries the AP information of the AP scanned by the STA.

S308: The AP 1 determines a target AP based on the measurement response.

Specifically, after receiving the measurement response, the AP 1 obtains the AP information, in the measurement response, of the AP scanned by the STA. Signal strength information of the AP scanned by the STA may include AP information of one or more APs, and the AP 1 determines one AP of the one or more APs as the target AP.

S309: The AP 1 sends a transmission management request to the STA through the connection.

The transmission management request indicates the STA to disconnect from a currently connected AP and access the target AP.

S310: After receiving the transmission management request through the connection, the STA sends a transmission management response to the AP 1 through the connection.

In some embodiments, the measurement request includes a beacon request in the IEEE 802.11k protocol, and the measurement response includes a beacon report in the IEEE 802.11k protocol. The transmission management request includes a BSS transition management request in the IEEE 802.11v protocol. The transmission management response includes a BSS transition management response in the IEEE 802.11v protocol. In this way, a protocol transmitted between the STA and the AP 1 is content specified in a standard protocol, which facilitates implementation on an AP side.

S311: The STA disconnects from the AP 1, and accesses the AP 2.

It may be understood that, in this embodiment of this application, an example in which the AP 2 is the target AP is used. As shown in FIG. 3, the STA is wirelessly disconnected from the AP 1, and accesses the AP 2. Certainly, in another embodiment, the target AP includes another AP scanned by the STA.

It may be understood that, in step S311, the STA may connect to the AP 2 based on a connection method set by the STA. For example, the STA may first disconnect from the AP 1 (for example, after disconnecting the Wi-Fi connection), and then scan the AP 2 through a specified service set identifier (Service Set Identifier, SSID) and access the AP 2. Certainly, in another embodiment, the STA may alternatively first scan the AP 2 through the SSID and access the AP 2. In addition, after the STA successfully accesses the AP 2, the STA disconnects the Wi-Fi connection with the AP 1.

It may be understood that, through establishing the COAP protocol-based connection between the STA and the AP 1, the STA and the AP 1 may transmit the exchange information (for example, the measurement request and the transmission management request) through the connection. In addition, the STA is guided, through the exchange information, to perform handover to and access an AP (for example, the AP 2) that has a strong RSSI from an AP (for example, the AP 1) that has a weak RSSI for the current STA.

In some embodiments, a plurality of APs on the WLAN use a wireless mesh network, namely, mesh networking. The plurality of APs, which use the mesh networking, on the WLAN have a same SSID. In this way, when receiving the measurement request from the AP, the STA needs to scan only an AP whose SSID is the same as that of the AP.

In some embodiments, the target AP is an AP, in the one or more APs scanned by the STA, which has a strong RSSI for the current STA. Certainly, in another embodiment, to improve accuracy of determining the target AP, the AP 1 may determine the target AP based on a parameter such as an RSSI of the STA for the AP 1, a negotiated rate (rx_rate) of the AP 1, current real-time traffic of the STA, and RSSIs and channel usage (channel usage) of the plurality of APs scanned by the STA.

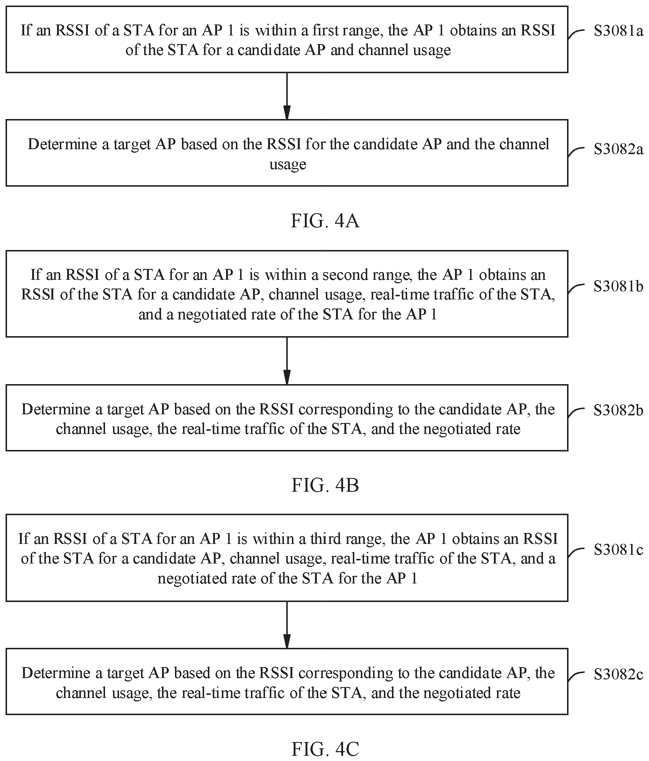

FIG. 4A is a schematic flowchart of determining the target AP according to an embodiment of this application.

It may be understood that, in a first scenario, when determining that the RSSI of the STA for the AP 1 is less than a threshold, the AP 1 determines that the signal of the STA is weak, and the STA meets a handover condition and may trigger a handover, so that the STA performs handover to an AP that has a strong RSSI for the current STA. The AP determines the target AP based on the AP scanned by the STA, and guides the STA to access the target AP.

It may be understood that, as shown in FIG. 4, in the first scenario, if the surrounding AP scanned by the STA is a candidate AP, determining the target AP, based on the measurement response, in step S308 includes:
S3081a: If the RSSI of the STA for the AP 1 is within a first range, the AP 1 obtains an RSSI of the STA for the candidate AP and channel usage.

In step S3081a, the STA performs scanning, and may obtain the RSSI of the STA for the candidate AP. The STA sends, to the AP 1, an RSSI measurement response that carries the candidate AP. The AP 1 may obtain the RSSI of the STA for the candidate AP by parsing the measurement response.

In an embodiment, because the AP 1 serves as the server, and the COAP protocol-based connection is established between the AP 1 and the candidate AP (for example, the AP 2), the AP 1 may obtain a parameter of the candidate AP through the connection, where the parameter may include the channel usage.

Specifically, a method for obtaining, by the AP 1, the parameter of the candidate AP includes:
An AP identifier of the candidate AP is obtained based on the measurement response.

The AP 1 sends, based on the AP identifier of the candidate AP, a parameter request to the candidate AP through the connection.

The candidate AP sends a parameter response corresponding to the parameter request to the AP 1. The parameter response carries the channel usage of the candidate AP.

It may be understood that, if there are a plurality of candidate APs, for example, two or more than two, the AP 1 sends a corresponding parameter request to each candidate AP, to obtain the channel usage of the plurality of candidate APs.

It may be understood that, in step S3081a, if a value, within the first range, of the RSSI of the STA for the AP 1 is less than the threshold, the first range may be preset in the AP 1. For example, if the threshold includes 50 dBm, and the first range is 0-20 dBm, all values within the first range are less than the threshold.

S3082a: Determine the target AP based on the RSSI corresponding to the candidate AP and the channel usage.

The RSSI corresponding to the candidate AP is the RSSI of the current STA for the candidate AP.

Specifically, if there is one candidate AP, the AP 1 determines whether the RSSI 1 of the STA for the candidate AP is greater than the RSSI 2 of the STA for the AP 1, and determines whether the channel usage is less than a first usage threshold. If the RSSI 1 is greater than the RSSI 2 and the channel usage of the candidate AP is less than the first usage threshold, the candidate AP is determined as the target AP. Otherwise, it is determined that the candidate AP is not the target AP.

For example, assume that the RSSI 1 of the AP 2 is 20 dBm, the RSSI 2 of the AP 1 is 15 dBm, the first usage threshold is 80%, and the channel usage of the AP 2 is 70%. Because the RSSI 1 is greater than the RSSI 2 and the channel usage is less than the first usage threshold, the AP 2 may be determined as the target AP.

It may be understood that, in another embodiment, if there are a plurality of candidate APs, for example, two or more than two, the AP 1 selects an AP, which has a maximum RSSI for the STA, from the plurality of candidate APs as a target candidate AP. Then, if channel usage of the target candidate AP is less than the first usage threshold, the AP 1 determines the target candidate AP as the target AP. Otherwise, it is determined that the candidate AP is not the target AP.

It may be understood that if the channel usage of the target candidate AP is greater than the first usage threshold, an AP, which has the maximum RSSI for the STA, other than the target candidate AP is selected from the plurality of candidate APs as a new target candidate AP. If channel usage of the new target candidate AP is less than the first usage threshold, the AP 1 determines the new target candidate AP as the target AP. Certainly, if the new target candidate AP does not meet a condition for being used as a target AP, the target candidate AP is updated. The update is cyclically performed in sequence until a target AP that meets the condition is found. If none of the candidate APs meets the condition of the target AP, the STA does not perform the handover.

In some embodiments, if the target candidate AP is the target AP, the RSSI of the STA for the target candidate AP is greater than the RSSI of the STA for the AP 1, and a difference between the two RSSIs is greater than a preset signal strength. The preset signal strength includes 5 dBm or 10 dBm.

FIG. 4B is another schematic flowchart of determining the target AP according to an embodiment of this application.

It may be understood that, in a second scenario, if the RSSI of the STA for the AP 1 is within a second range, and a value within the second range is greater than a value within the first range and is less than the threshold, determining the target AP, based on the measurement response, in step S308 includes:
S3081b: If the RSSI of the STA for the AP 1 is within the second range, the AP 1 obtains an RSSI of the STA for a candidate AP, channel usage, real-time traffic of the STA, and a negotiated rate of the STA for the AP 1.

Because the STA currently establishes the Wi-Fi connection with the AP 1, the AP 1 may directly obtain the real-time traffic of the STA and the negotiated rate of the STA for the AP 1.

The method for the AP 1 to obtain a parameter of the candidate AP is described in step S3081a. Details are not described herein again.

For example, the threshold may be 50 dBm, the first range is 0-20 dBm, the second range includes 21-30 dBm, and the value within the second range is greater than the value within the first range and less than the threshold.

S3082b: Determine the target AP based on the RSSI corresponding to the candidate AP, the channel usage, the real-time traffic of the STA, and the negotiated rate.

Specifically, if there is one candidate AP, the AP 1 determines whether the RSSI 1 corresponding to the candidate AP is greater than the RSSI 2 corresponding to the AP, whether the channel usage of the candidate AP is less than a second usage threshold, whether the real-time traffic of the STA is less than a preset traffic threshold, and whether the negotiated rate of the AP 1 is less than a first rate threshold. If the RSSI 1 is greater than the RSSI 2, the channel usage of the candidate AP is less than the second usage threshold, the real-time traffic of the STA is less than the preset traffic threshold, and the negotiated rate is less than the first rate threshold, the candidate AP is the target AP. If any one of the foregoing four items is not met, it is determined that the candidate AP is not the target AP. The second usage threshold is less than the first usage threshold.

Further, if there are a plurality of candidate APs, for example, two or more than two, the AP 1 selects an AP, corresponding to a maximum RSSI, from the plurality of candidate APs as a target candidate AP. If an RSSI corresponding to the target candidate AP is greater than the RSSI corresponding to the AP 1, channel usage of the target candidate AP is less than the second usage threshold, the real-time traffic of the STA is less than the preset traffic threshold, and the negotiated rate is less than the first rate threshold, the AP 1 determines the target candidate AP as the target AP. The second usage threshold is less than the first usage threshold.

It may be understood that if the channel usage of the target candidate AP is greater than the second usage threshold, the real-time traffic of the STA is greater than the preset traffic threshold, or the negotiated rate is greater than the first rate threshold, the AP, corresponding to the maximum RSSI for the current STA, other than the target candidate APP is selected from the plurality of candidate APs as a new target candidate AP. If channel usage of the new target candidate AP is less than the second usage threshold, the real-time traffic of the STA is less than the preset traffic threshold, and the negotiated rate is less than the first rate threshold, the AP 1 determines the new target candidate AP as the target AP. Certainly, if the new candidate AP does not meet a condition for being used as the target AP, the target candidate AP is updated. The update is cyclically performed in sequence until a target AP that meets the condition is found. If none of the candidate APs meets the condition of the target AP, the STA does not perform the handover.

FIG. 4C is a still another schematic flowchart of determining the target AP according to an embodiment of this application.

It may be understood that, in a third scenario, when the RSSI of the STA for the AP 1 is within a third range, and a value within the third range is greater than a value within the second range and is less than the threshold, determining the target AP, based on the measurement response, in step S308 includes:
S3081c: If the RSSI of the STA for the AP 1 is within the third range, the AP 1 obtains an RSSI of the STA for a candidate AP, channel usage, real-time traffic of the STA, and a negotiated rate of the STA for the AP 1.

Because the STA currently establishes the Wi-Fi connection with the AP 1, the AP 1 may directly obtain the real-time traffic of the STA and the negotiated rate of the STA for the AP 1.

The method for the AP 1 to obtain a parameter of the candidate AP is described in step S3081a. Details are not described herein again.

For example, the third range includes 31-50 dBm, the threshold may include 50 dBm, the second range includes 20-30 dBm, and the value within the third range is greater than the value within the second range and less than the threshold.

S3082c: Determine the target AP based on the RSSI corresponding to the candidate AP, the channel usage, the real-time traffic of the STA, and the negotiated rate.

Specifically, if there is one candidate AP, the AP 1 determines whether the RSSI 1 of the STA for the candidate AP is greater than the RSSI 2 of the STA for the AP 1, whether the channel usage is less than a third usage threshold, whether the real-time traffic of the STA is less than a preset traffic threshold, and whether the negotiated rate is less than a second rate threshold. If the RSSI 1 is greater than the RSSI 2, the channel usage of the candidate AP is less than the second usage threshold, the real-time traffic of the STA is less than the preset traffic threshold, and the negotiated rate is less than the second rate threshold, the candidate AP is the target AP. If any one of the foregoing four items is not met, it is determined that the candidate AP is not the target AP. The third usage threshold is less than the second usage threshold, and the second rate threshold is greater than the first rate threshold.

Further, if there are a plurality of candidate APs, for example, two or more than two, the AP 1 selects an AP, corresponding to a maximum RSSI for the current STA, from the plurality of candidate APs as a target candidate AP. If an RSSI of the STA for the target candidate AP is greater than the RSSI of the STA for the AP 1, the real-time traffic of the STA is less than the preset traffic threshold, the negotiated rate is less than the second rate threshold, and channel usage of the target candidate AP is greater than the third usage threshold, the AP 1 determines the target candidate AP as the target AP. The second rate threshold is greater than the first rate threshold, and the third usage threshold is less than the second usage threshold.

It may be understood that if the channel usage of the target candidate AP is greater than the third usage threshold, the real-time traffic of the STA is greater than the preset traffic threshold, or the negotiated rate is greater than the second rate threshold, the AP, corresponding to the maximum RSSI, other than the target candidate APP is selected from the plurality of candidate APs as a new target candidate AP. If channel usage of the new target candidate AP is less than the third usage threshold, the real-time traffic of the STA is less than the preset traffic threshold, and the negotiated rate is less than the second rate threshold, the AP 1 determines the new target candidate AP as the target AP. Certainly, if the new candidate AP does not meet a condition for being used as the target AP, the target candidate AP is updated. The update is cyclically performed in sequence until a target AP that meets the condition is found. If none of the candidate APs meets the condition of the target AP, the STA does not perform the handover.

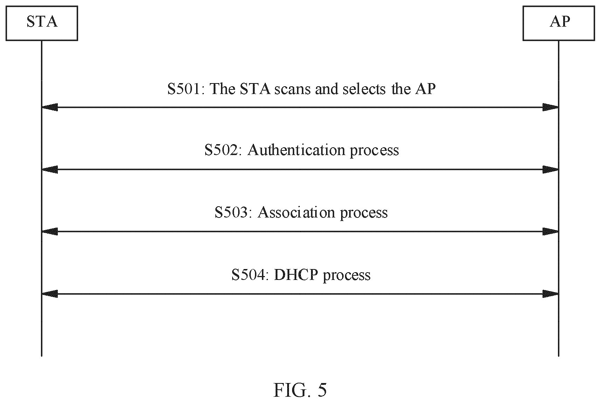

FIG. 5 is a diagram of accessing an AP by a STA. As shown in FIG. 5, an access process includes the following steps.

S501: The STA scans and selects the AP.

The scanning includes active scanning and passive scanning. The active scanning means that the STA actively sends a probe request (probe request) on a channel that is supported by the STA, to detect a surrounding wireless network. The probe request is classified into two types: without an SSID specified and with an SSID specified. The probe request without an SSID specified is used to scan all surrounding APs of the STA, and one of the all scanned APs may be determined for access. The probe request with an SSID specified is used to scan the specified SSID. Correspondingly, after receiving the probe request, if determining that the SSID in the probe request is the same as the SSID of the AP, the AP returns a Probe Response to the STA.

S502: Perform an authentication process.

Specifically, after the STA determines the AP to be accessed, the STA sends an authentication request (Authentication request) to the AP, and the AP returns an authentication response (Authentication response) to the STA. The STA can access the AP only after the authentication succeeds.

S503: Perform an association process.

Specifically, after the authentication, the STA sends an association request (association request) to the AP. The association request carries and includes a performance parameter of the STA, for example, a protocol supported by the STA. The AP may determine, based on the performance parameter of the STA, whether the STA supports the IEEE 802.11v protocol and the IEEE 802.11k protocol. Certainly, the performance parameter further includes a rate, a channel, and a QoS capability that are supported by the STA, and selected access authentication and encryption algorithms, and the like.

After receiving the association request sent by the STA, the AP sends an association response (association response) to the STA.

S504: Perform a dynamic host configuration protocol (Dynamic Host Configuration Protocol, DHCP) process.

Specifically, after the STA successfully accesses the AP, the AP may further allocate an IP address to the STA through the DHCP. In this way, the STA may establish a transmission bearer protocol-based connection with the AP based on the IP address.

It may be understood that, as shown in FIG. 5, the STA accesses the AP. In the access process, the AP may obtain a performance parameter supported by the STA. After the access is completed, the AP allocates the IP address to the STA. The STA establishes the transmission bearer protocol-based connection with the AP based on the IP address.

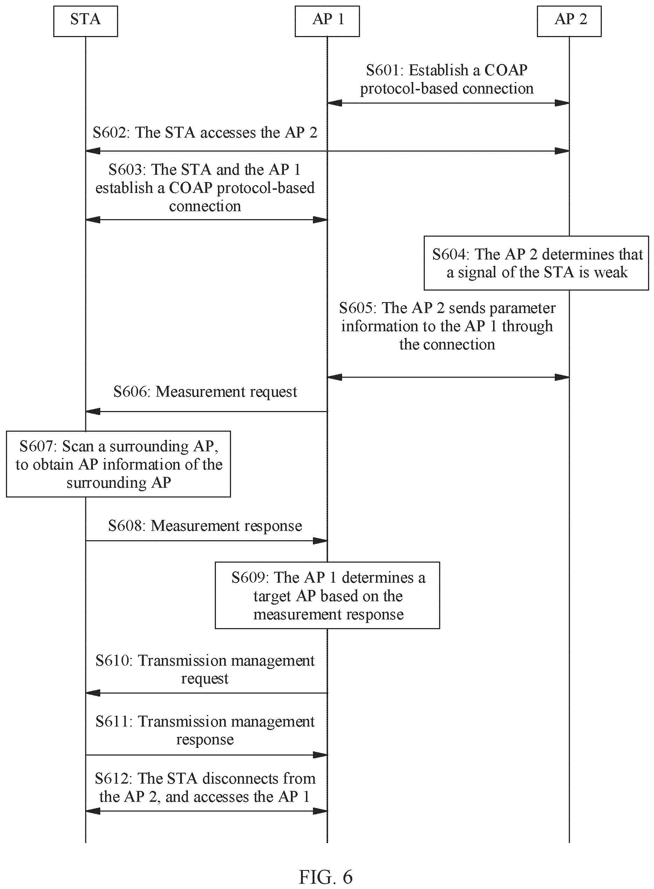

FIG. 6 is a diagram of an information exchange scenario of another handover method according to an embodiment of this application. A difference from the handover method shown in FIG. 3 lies in that: In the handover method shown in FIG. 6, the AP 1 and the AP 2 establish a COAP protocol-based connection, the AP 1 serves as a server, and the AP 2 serves as a client. The STA first accesses the AP 2. The AP 2 determines that an RSSI of the STA for the AP is weak. The AP 2 sends, to the AP 1, an RSSI, real-time traffic, and a negotiated rate of the current STA, and channel usage of the AP 2. The AP 1 determines a target AP and guides the STA to access the target AP.

Specifically, the handover method shown in FIG. 6 may include the following steps.

S601: The AP 1 and the AP 2 establish the COAP protocol-based connection.

The AP 1 serves as a connected server, and the AP 2 serves as a connected client.

Further, if the AP serves as the server on a network, the AP further has a function of an access controller (AC), for example, responsible for managing another AP.

In some embodiments, the AP 1 establishes the connection with the another AP, and may transmit a parameter of the AP through the established connection, for example, channel usage.

S602: The STA accesses the AP 2.

Specifically, the STA may scan and discover the AP 2, and then perform link authentication with the AP 2. After the authentication succeeds, the STA establishes an association with the AP 2, and accesses the AP 2. That is, the STA establishes a Wi-Fi connection with the AP 2.

S603: The STA and the AP 1 establish the COAP protocol-based connection.

Specifically, after the STA accesses the AP 2, the AP 2 allocates an IP address to the STA. The AP establishes the COAP protocol-based connection with the AP 1 based on the IP address. The AP 1 serves as the server, and the STA serves as the client.

In some embodiments, before step S303 is performed, the STA accesses the AP 2 and provides a performance parameter for the AP 2, and the AP 2 determines, based on the performance parameter of the STA, whether the STA supports a target protocol. The target protocol includes the IEEE 802.11v protocol and the IEEE 802.11k protocol.

Specifically, the method further includes:
The AP 1 obtains the performance parameter of the STA, and determines whether the STA supports the target protocol based on the performance parameter.

If the AP 1 determines that the STA supports the target protocol, an indication message may be sent to the AP 1 through the AP 2. The indication message indicates that the COAP protocol-based connection does not need to be established between the STA and the AP 1.

If the AP 1 determines that the STA does not support the target protocol, step S603 is performed, and the COAP protocol-based connection is established between the STA and the AP 1.

S604: The AP 2 determines that a signal of the STA is weak.

Specifically, after the AP 2 establishes an association with the STA, if the AP 2 determines that the received signal strength RSSI of the STA for the AP 2 is weak (for example, the RSSI is less than a preset threshold), the AP 2 determines that the signal of the STA is weak. Then, the AP determines that the STA may perform handover to another AP that has the strong received signal strength.

The preset threshold may be preset in the AP 2.

S605: The AP 2 sends parameter information to the AP 1 through the connection.

The parameter information includes the RSSI of the current STA for the AP 2, the real-time traffic, the negotiated rate, and the channel usage of the AP 2.

In some embodiments, step S606 includes: The AP 2 sends a parameter information report to the AP 1 through the connection. The parameter information report carries the RSSI of the current STA for the AP 2, the real-time traffic, the negotiated rate, and the channel usage of the AP 2. The AP 1 sends a parameter information response to the AP 2 through the connection.

S606: The AP 1 sends a measurement request to the STA through the connection.

The measurement request indicates the STA to perform scanning, to obtain AP information of a surrounding AP of the STA.

S607: After receiving the measurement request through the connection, the STA scans the surrounding AP, to obtain the AP information of the surrounding AP.

S608: The STA sends a measurement response to the AP 1 through the connection.

The measurement response carries the AP information of the AP scanned by the STA.

S609: The AP 1 determines the target AP based on the measurement response.

S610: The AP 1 sends a transmission management request to the STA through the connection.

The transmission management request indicates the STA to disconnect from a currently connected AP and access the target AP.

The target AP in FIG. 6 is the AP 1. Certainly, in another embodiment, the target AP includes another AP scanned by the STA.

S611: After receiving the transmission management request, the STA sends a transmission management response to the AP 1 through the connection.

S612: The STA disconnects from the AP 2, and accesses the AP 1.

In this way, through establishing the COAP protocol-based connection between the STA and the AP 1, the STA and the AP 1 may transmit exchange information (for example, the measurement request and the transmission management message) through the connection. In addition, the STA is guided, through the exchange information, to perform handover to and access an AP for which the RSSI of the STA for the AP is strong from an AP corresponding to a weak RSSI of the STA for the AP.

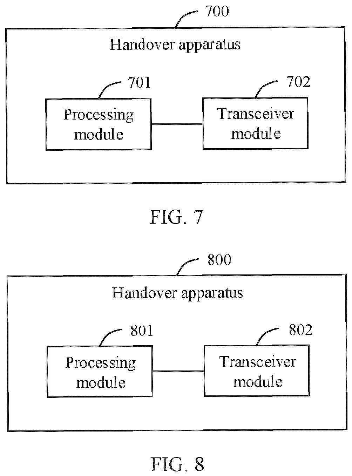

FIG. 7 is a diagram of a structure of a handover apparatus according to an embodiment of this application. The handover apparatus 700 may implement functions of the AP 1 in the embodiments shown in FIG. 3 and FIG. 6. With reference to FIG. 7, the handover apparatus 700 includes a processing module 701 and a transceiver module 702. These modules may perform corresponding functions of the AP in the foregoing method examples. An example is given below.

For determining that the STA meets a handover condition, the transceiver module 702 is configured to send a measurement request to the STA through a connection with the STA. The measurement request indicates the STA to perform scanning, to obtain AP information of a candidate AP to which the STA can wirelessly connect.

The transceiver module 702 is further configured to receive, through the connection, a measurement response sent by the STA. The measurement response carries the AP information of the candidate AP.

The processing module 701 determines a target AP based on the AP information of the candidate AP.

The transceiver module 702 is further configured to send a transmission management request to the STA through the connection. The transmission management request is used to guide the STA to access the target AP.

The transceiver module 702 is further configured to receive, through the connection, a transmission management response sent by the STA.

In some embodiments, the AP information includes an AP identifier and a second RSSI of the STA for the AP corresponding to the AP identifier. If a first RSSI of the STA for the AP is within a first range, the processing module 701 is further configured to: obtain the second RSSI of the STA for the candidate AP and channel usage of the candidate AP; and determine the target AP based on the second RSSI and the channel usage.

In some embodiments, if the first RSSI is within a second range, the processing module 701 is further configured to: obtain the second RSSI, the channel usage of the candidate AP, and real-time traffic of the STA, where a value within the second range is greater than a value within the first range; and determine the target AP based on the second RSSI, the channel usage, and the real-time traffic.

In some embodiments, the processing module 701 is further configured to: obtain the first received signal strength RSSI of the STA for the AP; and if the first RSSI is less than a threshold, determine that the STA meets the handover condition.

It may be understood that FIG. 7 is merely an example of the handover apparatus, but is not a limitation. The handover apparatus may have more or fewer modules than those shown in FIG. 7.

FIG. 8 is a diagram of a possible structure of the handover apparatus in the foregoing embodiments. The handover apparatus 800 may implement functions of the STA in the embodiments shown in FIG. 3 and FIG. 6. With reference to FIG. 8, the handover apparatus 800 includes a processing module 801 and a transceiver module 802. These modules may perform corresponding functions of the STA in the foregoing method examples. An example is given below.

The transceiver module 802 is configured to receive, through a connection, a measurement request sent by the AP.

The processing module 801 is configured to perform scanning based on the measurement request, to obtain AP information of a candidate AP to which the STA can wirelessly connect.

The transceiver module 802 is further configured to send a measurement response to the AP through the connection. The measurement response carries the AP information of the candidate AP.

The transceiver module 802 is further configured to receive, through the connection, a transmission management request sent by the AP. The transmission management request is used to guide the STA to access a target AP.

The transceiver module 802 is further configured to send a transmission management response to the STA through the connection.

The processing module 801 is further configured to control the STA to disconnect from the AP and access the target AP.

It may be understood that FIG. 8 is merely an example of the handover apparatus, but is not a limitation. The handover apparatus may have more or fewer modules than those shown in FIG. 8.

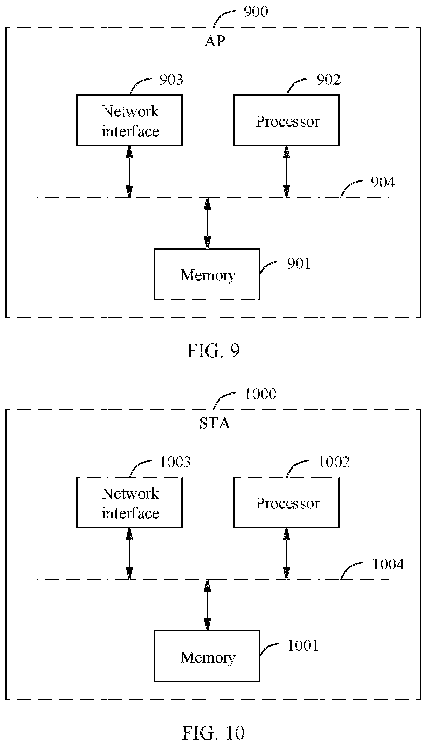

FIG. 9 is a diagram of a possible structure of the AP in the foregoing embodiments. The AP 900 includes: a processor 902, a network interface 903, a memory 901, and a bus 904.

The memory 901 is configured to store an instruction.

The processor 902 is configured to execute the instruction in the memory 901, so that the AP implements the handover method in the embodiments shown in FIG. 3 or the handover method in the embodiments shown in FIG. 6.

The network interface 903 is configured to communicate with another network device. The network interface 903 may be an ethernet (Ethernet) interface, an asynchronous transfer mode (asynchronous transfer mode, ATM) interface, or the like.

The network interface 903, the processor 902, and the memory 901 are connected to each other through the bus 904. The bus 904 may be a PCI bus, an EISA bus, or the like. Buses may be classified into an address bus, a data bus, a control bus, and the like. For ease of representation, only one bold line is used to represent the bus in FIG. 9, but this does not mean that there is only one bus or only one type of bus.

FIG. 10 is a diagram of a possible structure of the STA in the foregoing embodiments. The STA 1000 includes: a processor 1002, a network interface 1003, a memory 1001, and a bus 1004.

The memory 1001 is configured to store an instruction.

The processor 1002 is configured to execute the instruction in the memory 1001, so that the STA implements the handover method in the embodiments shown in FIG. 3 or the handover method in the embodiments shown in FIG. 6.

The network interface 1003 is configured to communicate with another network device. The network interface 1003 may be an ethernet (Ethernet) interface, an asynchronous transfer mode (asynchronous transfer mode, ATM) interface, or the like.

The network interface 1003, the processor 1002, and the memory 1001 are connected to each other through the bus 1004. The bus 1004 may be a PCI bus, an EISA bus, or the like. Buses may be classified into an address bus, a data bus, a control bus, and the like. For ease of representation, only one bold line is used to represent the bus in FIG. 10, but this does not mean that there is only one bus or only one type of bus.

A person skilled in the art should understand that embodiments of this application may be provided as a method, a system, or a computer program product. Therefore, this application may use a form of hardware embodiments, software embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code. Code of these computer programs may be stored in a computer readable memory that can guide a computer or another programmable data processing device to operate in a particular manner.

Embodiments of this application further provide a computer storage medium. The computer storage medium stores computer instructions. When the computer instructions are run on an ingress device, the ingress device is enabled to perform the foregoing related method steps, to implement the handover method in the foregoing embodiments.

Embodiments of this application further provide a computer program product. When the computer program product runs on an ingress device, the ingress device is enabled to perform the foregoing related steps, to implement the handover method in the foregoing embodiments.

In addition, embodiments of this application further provide an apparatus. The apparatus may be specifically a chip, a component, or a module. The apparatus may include a processor and a memory that are connected. The memory is configured to store computer-executable instructions. When the apparatus runs, the processor may execute the computer-executable instructions stored in the memory, to enable the chip to perform the handover method in the foregoing method embodiments.

The foregoing descriptions of implementations allow a person skilled in the art to clearly understand that, for the purpose of convenient and brief description, division of the foregoing functional modules is used as an example for illustration. In actual application, the foregoing functions can be allocated to different functional modules and implemented according to a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiments are merely examples. For example, division into the modules is merely logical function division. There may be another division manner during actual implementation. For example, a plurality of modules or components may be combined or integrated into another apparatus, or some features may be ignored or not performed. In addition, displayed or discussed mutual couplings or direct couplings or communication connections may be implemented through some interfaces. Indirect couplings or communication connections between apparatuses or modules may be implemented in electronic, mechanical, or other forms.

The modules described as separate parts may be or may not be physically separated. The parts displayed as modules may be one physical module or a plurality of physical modules, that is, may be located at one location or may be distributed at a plurality of different locations. Some or all of the modules may be selected according to an actual requirement to achieve the objectives of the solutions in embodiments.

In addition, functional modules in embodiments of this application may be integrated into one processing module, or each of the modules may exist alone physically, or two or more modules are integrated into one module. The integrated module may be implemented in a form of hardware, or may be implemented in a form of a software functional module.

If the integrated module is implemented in a form of a software function module and sold or used as an independent product, the integrated module may be stored in a readable storage medium. Based on such an understanding, the technical solutions in embodiments of this application essentially, or the part contributing to the conventional technology, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the method described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A handover method, wherein the handover method is applied to an access point AP on a wireless local area network WLAN, the AP establishes a transmission bearer protocol-based connection with a station STA that accesses the WLAN, the transmission bearer protocol uses a CS architecture, the AP serves as a server, and the handover method comprises:
determining that the STA meets a handover condition, and sending a measurement request to the STA through the connection, wherein the measurement request indicates the STA to perform scanning, to obtain AP information of a candidate AP to which the STA can wirelessly connect;
receiving, through the connection, a measurement response sent by the STA, wherein the measurement response carries the AP information of the candidate AP;
determining a target AP based on the AP information of the candidate AP;
sending a transmission management request to the STA through the connection, wherein the transmission management request is used to guide the STA to access the target AP; and
receiving, through the connection, a transmission management response sent by the STA.

2. The handover method according to claim 1, wherein the AP information comprises an AP identifier and a received signal strength RSSI of the STA for an AP corresponding to the AP identifier, and the determining a target AP based on the AP information of the candidate AP comprises:
obtaining a first RSSI of the STA for the AP;
if the first RSSI is within a first range, obtaining a second RSSI of the STA for the candidate AP and channel usage of the candidate AP; and
determining the target AP based on the second RSSI and the channel usage.

3. The handover method according to claim 2, wherein the handover method further comprises:
if the first RSSI is within a second range, obtaining the second RSSI, the channel usage of the candidate AP, and real-time traffic of the STA, wherein a value within the second range is greater than a value within the first range; and
determining the target AP based on the second RSSI, the channel usage, and the real-time traffic.

4. The handover method according to any one of claims 1 to 3, wherein the measurement request comprises a beacon request in the IEEE 802.11k protocol;
the measurement response comprises a beacon report in the IEEE 802.11k protocol;
the transmission management request comprises a BSS transition management request in the IEEE 802.11v protocol; and
the transmission management response comprises a BSS transition management response in the IEEE 802.11v protocol.

5. The handover method according to any one of claims 1 to 4, wherein the determining that the STA meets a handover condition comprises:
obtaining the first RSSI of the STA for the AP; and
if the first RSSI is less than a threshold, determining that the STA meets the handover condition.

6. The handover method according to any one of claims 1 to 5, wherein the transmission bearer protocol comprises any one of HTTP, MQTT, COAP, and LwM2M.

7. The handover method according to any one of claims 1 to 6, wherein before the AP establishes the transmission bearer protocol-based connection with the STA that accesses the wireless network, the handover method further comprises:
determining that the STA does not support the IEEE 802.11k protocol and/or the IEEE 802.11v protocol.

8. A handover method, wherein the handover method is applied to a station STA, and after accessing a wireless local area network WLAN, the STA establishes a transmission bearer protocol-based connection with an access point AP on the WLAN, the transmission bearer protocol uses a CS architecture, the AP serves as a server, and the handover method comprises: receiving, through the connection, a measurement request sent by the AP;
performing scanning based on the measurement request, to obtain AP information of a candidate AP to which the STA can wirelessly connect;
sending a measurement response to the AP through the connection, wherein the measurement response carries the AP information of the candidate AP;
receiving, through the connection, a transmission management request sent by the AP, wherein the transmission management request is used to guide the STA to access a target AP;
sending a transmission management response to the STA through the connection; and disconnecting from the connection with the AP, and accessing the target AP.

9. The handover method according to claim 8, wherein the measurement request comprises a beacon request in the IEEE 802. 11k protocol; the measurement response comprises a beacon report in the IEEE 802.11k protocol; the transmission management request comprises a BSS transition management request in the IEEE 802.11v protocol; and the transmission management response comprises a BSS transition management response in the IEEE 802.11v protocol.

10. The handover method according to claim 8 or 9, wherein the transmission bearer protocol comprises any one of HTTP, MQTT, COAP, and LwM2M.

11. An access point, wherein the access point comprises:
one or more processors; and
a storage apparatus, configured to store one or more programs, wherein
when the one or more programs are executed by the one or more processors, the one or more processors are enabled to implement the handover method according to any one of claims 1 to 7.

12. A station, wherein the station comprises:
one or more processors; and
a storage apparatus, configured to store one or more programs, wherein
when the one or more programs are executed by the one or more processors, the one or more processors are enabled to implement the handover method according to any one of claims 8 to 10.

13. A computer-readable storage medium, wherein the computer-readable storage medium stores a computer program, and when the program is executed by a processor, the handover method according to any one of claims 1 to 7 or the handover method according to any one of claims 8 to 10 is implemented.
